# EUROPEAN PATENT SPECIFICATION

(11) **EP 2 084 440 B1**
(45) Date of publication and mention of the grant of the patent: **11.01.2012**
(21) Application number: 07866150.1
(22) Date of filing: 20.11.2007
(51) Int. Cl.: F16K 15/02, F04B 53/10

(54) **CHECK VALVE ARRANGEMENT**
RÜCKSCHLAGVENTILANORDNUNG
SYSTEME DE CLAPET

(30) Priority: 21.11.2006 ZA 200609691
(43) Date of publication of application: 05.08.2009
(73) Proprietor: AEL MINING SERVICES LIMITED, Woodmead 2196 Sandton (ZA)
(72) Inventor: BÜHRMANN, Rudolph Teodor, 2196 Sandton (ZA); BÜHRMANN, Rudolph, 2196 Sandton (ZA); NIEMANN, Frank, 2196 Sandton (ZA)
(74) Representative: Moore, Christopher Mark
(86) International application number: PCT/ZA2007/000076
(87) International publication number: WO 2008/064375

(56) References cited:
- DE-A1- 3 426 670
- DE-U1- 20 013 763
- GB-A- 814 287
- US-A1- 2006 076 062

## Description

### BACKGROUND OF THE INVENTION

This invention relates to a valve arrangement for use in a pump and finds particular application in the pumping of fluids which possibly include suspended solids or particles.

In certain applications which involve the dosage, metering and mixing of fluids it is important to be able to pump a fluid in an accurate manner or, if two or more fluids are to be pumped, to be able to pump the fluids in accurate proportions. In the latter application, if a particle suspended in the fluid interferes with a sealing arrangement in the pump which is being used then, generally, the pump's capability of pumping to the required precision can be adversely affected.

This factor arises, for example, in the pumping of a passive explosive gel which must be mixed with an activator in a required relationship. If the constituents are not accurately mixed, due to a pumping irregularity, then the activated explosive gel, which is the end product, may malfunction. A particle suspended in a fluid which is being pumped can interfere with the pumping operation if it is interposed between a valve seat and a corresponding valve member or element. The valve element must be able to withstand the damage that can be caused by this type of particle. If the operating pressure within the pump is too low to crush the particle then there may be a significant fluid flow when the drive pressure that causes valve movement is stopped or reversed. In a situation which requires an accurate pumping rate the reverse flow will be detrimental to the desired performance of the end product.

GB814287 describes a non-return valve which includes two biased valve members, arranged in series. It is observed though that the valve members cannot tilt relative to a housing and that this factor exhibits a similar effect to what has been described in that the operation of the valve can adversely be affected by dirt.

The invention is concerned with a valve arrangement which, at least partly, addresses the aforementioned problem.

### SUMMARY OF INVENTION

The invention provides a valve assembly in a pump arrangement which allows for an accurate pumping rate of a fluid which includes suspended solids, the valve assembly including first and second valve arrangements, each valve arrangement respectively including a housing with an internal volume, an inlet to, and an outlet from, the volume, two valve seats which are serially located inside the volume between the inlet and the outlet, two valve members which are respectively sealingly engagable with the valve seats, characterized in that each valve arrangement further comprises guide formations which permit each valve member to move, along a respective path, away from its respective valve seat and to tilt to a limited extent relatively to such path and the valve seat, and wherein the valve arrangements are spaced from each other by a chamber between them which is of variable size and which is arranged so that fluid, which is to be pumped, is drawn from a source past the first valve arrangement into the chamber, and is expelled from the chamber past the second valve arrangement.

Preferably the second valve arrangement is mounted to a piston and is movable, with the piston, inside a bore in the housing whereby the size of the chamber is varied.

### BRIEF DESCRIPTION OF THE DRAWINGS

The invention is further described by way of example with reference to the accompanying drawings in which:
Figure 1 schematically illustrates a valve arrangement for the valve assembly according to the invention in a first mode;
Figure 2 shows the valve arrangement of Figure 1 in a second mode;
Figure 3 is a cross sectional side view of the valve arrangement taken on a line 3 - 3 in Figure 2; and
Figure 4 illustrates a valve assembly according to the invention which includes two valve arrangements each of the kind shown in Figures 1 to 3 in a continuous pumping configuration.

### DESCRIPTION OF PREFERRED EMBODIMENT

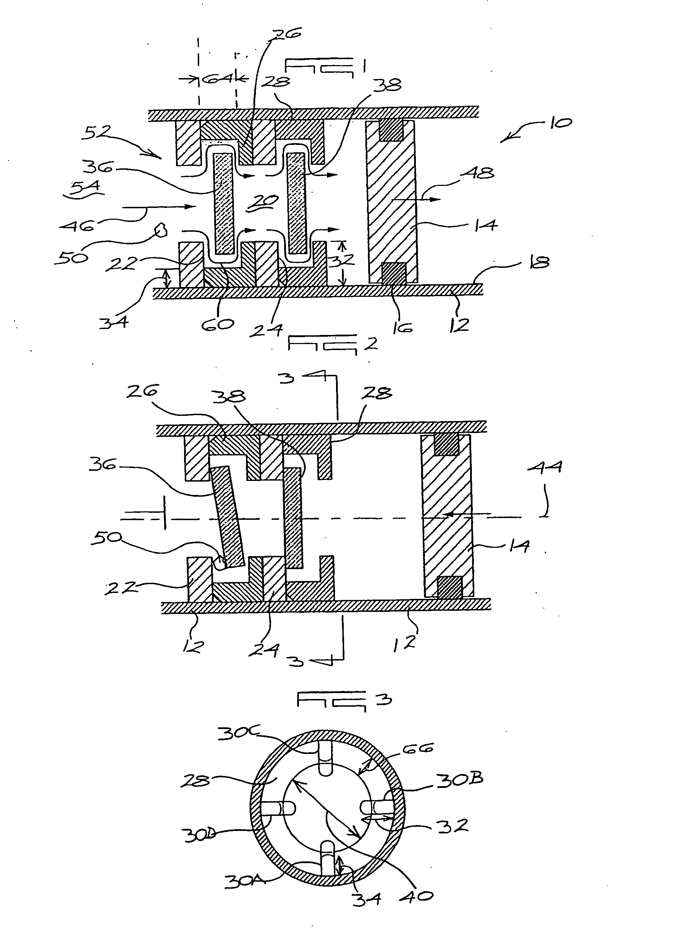

Figure 1 of the accompanying drawings illustrates a valve arrangement 10 positioned inside a portion of a suitable body 12. A piston 14 with suitable seals 16 is positioned inside a bore 18 for reciprocating movement. The actuation of the piston can be effected in any manner known in the art.

A volume 20 is defined inside the body. Positioned in a series arrangement inside the volume 20, are first and second valve seats 22 and 24 respectively. Guide structures 26 and 28 are positioned between the valve seats 22 and 24 and to the right of the valve seat 24 respectively.

Figure 3, which is a cross sectional view through the valve arrangement of Figure 2 taken on the line 3 - 3, illustrates the guide structure 28 end - on. The guide structure includes four vanes 30A, 30B, 30C and 30D respectively circumferentially displaced at 90° relatively to one another. Each vane extends radially inwardly by a maximum distance 32. As is shown in Figures 1 and 2 each vane has a stepped configuration with a smaller step extending radially inwardly by a distance 34.

First and second valve members 36 and 38 respectively are positioned inside the guide structures 26 and 28 respectively. Each valve member is made from a suitable material, for example polyurethane or glass-filled nylon, and is in the nature of a round disc with a diameter 40 (Figure 3) which is slightly less than the spacing between those portions of the vanes which project inwardly by the radial distance 34. The guide structures thus form cages which allow for movement of the respective valve members in an axial direction through the volume 20. Nonetheless, as is evident from Figure 2, the guide structures are such that the valve members can tilt to a limited extent and are not necessarily always at a right angle to a longitudinal axis 44 which extends through the volume 20 and the bore 18.

An arrow 46 in Figure 1 indicates the direction of fluid flow into the volume 20. Assume that the piston 14 is moving to the right in the direction of an arrow 48. A particle 50 is shown suspended in the fluid entering a mouth 52 to the volume. As the piston moves to the right, fluid pressure inside the volume between the piston and the second valve member 38 is reduced and the valve member is displaced to the right. A similar situation pertains in respect of the first valve member 36. Fluid therefore flows through the mouth 52 and around each valve member 36 and 38 as is indicated by means of arrow lines 60.

Figure 2 illustrates a situation which the invention is intended to address. The piston 14 reaches the end of its stroke and starts moving in the reverse direction along the bore 18. The pressure on the right hand side of each valve member tends to increase and the valve members, which are free to move inside their respective guide structures, are displaced to the left. The particle 50 is shown trapped between opposing surfaces of the valve seat 22 and the valve member 36 and therefore prevents the valve member from engaging with a sealing action with the seat 22. The valve member 38 however is in sealing engagement with its seat 24.

The trapped particle may allow a degree of fluid backflow to take place in the reverse direction (opposing the arrow 46) via the non-seated valve member 36. However, as the other valve member is sealed, pressure in the chamber to the right of the valve member 38 increases and fluid can be expelled from the chamber via a suitable port or duct, not shown.

The likelihood that particles dispersed in the fluid will simultaneously prevent the valve members 36 and 38 from engaging in a sealing manner with their respective seats is remote. A further factor to be borne in mind is that it is possible to increase the number of valve members and seats from 2 to 3 or even more if required.

The size of the particle 50 which can enter the volume 20 is restricted by using an appropriate strainer or filter. In this way it is ensured that a particle which does enter the volume is small enough to follow the path 60. To achieve this the particle should have a maximum cross sectional dimension which is less than the distance marked 64 in Figure 1 i.e. the spacing between the limiting portion of the guide structure and the opposing surface of the valve seat, and which is also less than the distance marked 66 in Figure 3 which is the separation in a radial sense between a peripheral edge of the valve member and an opposing inner surface of the body 12.

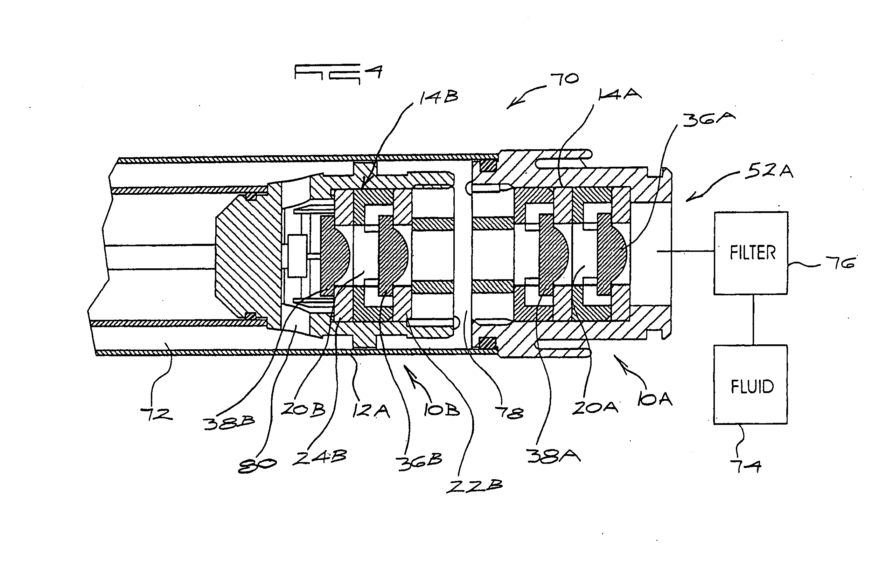

Figure 4 illustrates a valve assembly 70 which includes a first valve arrangement 10A and a second valve arrangement 10B with each valve arrangement being of the kind shown in Figures 1 to 3, a body 12A, and a piston 14A which has an active portion moving inside an annular space 72. Fluid which is to be pumped is drawn from a fluid source 74 and is passed through a filter 76 in accordance with the guidelines which have been referred to. Fluid can enter a mouth 52A to a volume 20A occupied by the first valve arrangement 10A. The second valve arrangement is positioned inside a second volume 20B. A chamber 78 is defined between the two valve arrangements.

When the piston is moved to the left in Figure 4, by means of a suitable actuating mechanism (not shown), the pressure inside the chamber 78 is decreased relatively to the pressure on the left side of each of the valve members 36B and 38B which are displaced to the right into sealing engagement with the corresponding valve seats 22B and 24B, in the manner which has been described. Fluid is thus pumped from the annular space 72 to an exit port at a downstream location. The effect of any particles in the fluid which is being pumped is similar to what has been described in that, in most instances, the independently movable valve members can accommodate imperfect sealing of one valve member with a minimal effect on pumping accuracy.

The pressure in the volume 78 is reduced and the valve members 36A and 38A are opened (disengaged from their seats). Fluid 74 then flows through the filter 76 and into the volume 78 to make up the fluid which is pumped by the piston from the annular space 72.

On the return stroke the piston moves to the right. In this instance the pressure inside the chamber 78 increases relatively to the pressure on the right side of each of the valve members 36A and 38A which are thus moved into sealing engagement with the respective valve seats. The pressure inside the chamber is higher than the pressure on the left side of each of the valve members 36B and 38B which are therefore opened (displaced from their respective valve seats). Fluid thus flows from the chamber 78 past the valve members 36B and 38B, through a port 80 which extends transversely in the piston, and into the annular space 72.

In Figure 4 the valve arrangements are shown in a common housing. This is not necessarily the case for the valve arrangements could be in separate housings which are connected in any appropriate way to a common chamber.

The invention makes it possible to dispense a fluid in a precise manner. This is particularly beneficial in the mixing of a passive gel with an activator to produce a gel-type explosive.

## Claims

1. A valve assembly (70) for a pump arrangement which allows for an accurate pumping rate of a fluid which includes suspended solids, the valve assembly (70) including first and second valve arrangements (10A, 10B), each valve arrangement (10A, 10B) respectively including a housing with an internal volume (20A, 20B), an inlet to, and an outlet from, the volume (20A, 20B), two valve seats (22B, 24B) which are serially located inside the volume between the inlet and the outlet, two valve members (36A, 38A; 36B, 38B) which are respectively sealingly engagable with the valve seats, **characterized in that** each valve arrangement (10A, 10B) further comprises guide formations which permit each valve member (36A, 38A; 36B, 38B) to move, along a respective path, away from its respective valve seat (22B, 24B) and to tilt to a limited extent relatively to such path and the valve seat (22B, 24B), and wherein the valve arrangements (10A, 10B) are spaced from each other by a chamber (78) between them which is of variable size and which is arranged so that fluid, which is to be pumped, is drawn from a source (74) past the first valve arrangement (10A) into the chamber (78), and is expelled from the chamber (78) past the second valve arrangement (10B).

2. A valve assembly according to claim 1, **characterized in that** the second valve arrangement (10B) is mounted to a piston (14B) and is movable, with the piston (14B), inside a bore in the housing (12) whereby the size of the chamber (78) is varied.

## Patentansprüche

1. Ventilaufbau (70) für eine Pumpenanordnung, der eine exakte Pumpmenge einer Schwebstoffe enthaltenden Flüssigkeit ermöglicht, wobei der Ventilaufbau (70) eine erste und eine zweite Ventilanordnung (10A, 10B) umfasst, wobei jede Ventilanordnung (10A, 10B) jeweils ein Gehäuse mit einem Innenvolumen (20A, 20B) umfasst sowie einen Einlass in und einen Auslass aus dem Volumen (20A, 20B), zwei Ventilsitze (22B, 24B), die in Reihe in dem Volumen zwischen dem Einlass und dem Auslass angeordnet sind und zwei Ventilelemente (36A, 38A, 36B, 38B), die jeweils abdichtend in die Ventilsitze eingreifen können, **dadurch gekennzeichnet, dass** jede Ventilanordnung (10A, 10B) weiterhin Führungsformationen umfasst, die es jedem Ventilelement (36A, 38A, 36B, 38B) ermöglichen, sich entlang einer jeweiligen Bahn zu bewegen, weg von seinem jeweiligen Ventilsitz (22B, 24B), und in beschränktem Maß relativ zu dieser Bahn und dem Ventilsitz (22B, 24B) abzukippen, wobei die Ventilanordnungen (10A, 10B) durch eine zwischen ihnen befindliche Kammer (78) voneinander beabstandet sind, wobei die Kammer eine variable Größe aufweist und so gestaltet ist, dass zu pumpende Flüssigkeit aus einer Quelle (74) über die erste Ventilanordnung (10A) in die Kammer (78) gezogen wird, und aus der Kammer (78) über die zweite Ventilanordnung (10B) ausgestoßen wird.

2. Ventilaufbau nach Anspruch 1, **dadurch gekennzeichnet, dass** die zweite Ventilanordnung (10B) an einem Kolben (14B) befestigt und bewegbar ist, wobei der Kolben (14B) in einem Bohrloch in dem Gehäuse (12) angeordnet ist, wodurch die Größe der Kammer (78) variieren kann.

## Revendications

1. Assemblage de soupape (70) destiné à un agencement de pompe qui permet un débit de pompage précis d'un fluide dans lequel se situent des solides en suspension, l'assemblage de soupape (70) comprenant des premier et second agencements de soupape (10A, 10B), chaque agencement de soupape (10A, 10B) comprenant respectivement un logement qui présente un volume intérieur (20A, 20B), une sortie vers le volume (20A, 20B) et une sortie en provenance de celui-ci, deux sièges de soupape (22B, 24B) qui se situent en série à l'intérieur du volume entre l'entrée et la sortie, deux éléments de soupape (36A, 38A ; 36B, 38B) qui peuvent être mis en prise de manière étanche respectivement avec les sièges de soupape, **caractérisé en ce que** chaque agencement de soupape (10A, 10B) comprend en outre des formations de guidage qui permettent à chaque élément de soupape (36A, 38A ; 36B, 38B) de se déplacer, le long d'un chemin respectif, en allant en s'éloignant de son siège de soupape respectif (22B, 24B) et de s'incliner de façon limitée par rapport à un tel chemin et au siège de soupape (22B, 24B), et dans lequel les agencements de soupape (10A, 10B) sont espacés l'un de l'autre par une chambre (78) qui se situe entre eux et qui présente une taille variable et qui est agencée de telle sorte que le fluide, qui doit être pompé, soit tiré à partir d'une source (74), passe à travers le premier agencement de soupape (10A) dans la chambre (78), et soit expulsé à partir de la chambre (78) et passe à travers le second agencement de soupape (10B).

2. Ensemble de soupape selon la revendication 1, **caractérisé en ce que** le second agencement de soupape (10B) est monté sur un piston (14B) et est mobile, avec le piston (14B), à l'intérieur d'un alésage dans le logement (12) grâce à quoi la taille de la chambre (78) varie.
